# EUROPEAN PATENT SPECIFICATION

(11) **EP 4 049 829 B1**
(45) Date of publication and mention of the grant of the patent: **21.08.2024**
(21) Application number: 21159367.8
(22) Date of filing: 25.02.2021
(51) Int. Cl.: B29C 64/124, B22F 12/00, B22F 10/00, B33Y 80/00, B33Y 30/00, B33Y 10/00, B29C 64/40, B29C 64/165, B29C 64/153, B22F 10/28, B22F 10/47, B33Y 40/20

(54) **SUPPORT STRUCTURE AND A THREE-DIMENSIONAL OBJECT AND METHOD OF PRODUCING THE SAME**
STÜTZSTRUKTUR UND EIN DREIDIMENSIONALES OBJEKT UND VERFAHREN ZU DEREN HERSTELLUNG
STRUCTURE DE SUPPORT ET UN OBJET TRIDIMENSIONNEL ET LEURS PROCÉDÉS DE FABRICATION

(43) Date of publication of application: 31.08.2022
(73) Proprietor: EOS GmbH Electro Optical Systems, 82152 Krailling (DE)
(72) Inventor: ABBATIELLO, Vincenzo, 82205 Gilching (DE)
(74) Representative: Prüfer & Partner mbB Patentanwälte · Rechtsanwälte

(56) References cited:
- EP-A1- 3 219 417
- US-A1- 2018 243 828
- US-A1- 2019 126 558

## Description

The present application relates to a support structure and a three-dimensional object produced in an additive manufacturing process and a method of producing a three-dimensional object and a support structure in an additive manufacturing process. Additive manufacturing is used in numerous industries and applications for the production of prototypes or series production. In an additive manufacturing process, also referred to as 3D printing, generally a three-dimensional object is produced by sequentially forming cross-sections of the object based on digital data of the object. An example of an additive manufacturing method is laser sintering or laser melting, in which method a building material in powder form is successively applied layer by layer on a building platform and each layer of the building material is selectively solidified at specific points that correspond to the respective cross-section of the object to be produced by means of a laser beam impinging on the specific points.

When producing objects with complex geometries, such as undercuts or internal cavities, support structures are often required to support overhanging parts.

US 2019/0099957 A1 describes a method for additively manufacturing three-dimensional objects by means of successive layerwise selective irradiation and consolidation of layers of a build material. The method comprises building of a wall region that limits a chamber-like build region in the build plane, wherein the object is built in the build region. At least one support structure is additively built in the build region, which support structure extends at least partly between the wall region and at least one object that is being built in the build region.

US 2018/0162061 A1 describes a method of fabricating an additively manufactured part, comprising depositing a part from successive layers of model material, the part surrounding a hole formed therein, and depositing a support structure from successive layers of the model material within the hole. Release layers of a release material are formed above and below the support structure. During sintering, the part and the support structure densify as a whole at a uniform rate, and the release material reduces to a loose ceramic powder to release the support structure from the hole, and the support structure prevents a shape of the hole formed in the part from distorting during sintering.

US 2009/0039570 A1 describes a method of forming a component from solid freeform fabrication comprising the step of building an integral support around the component during manufacture thereof. The stiffness the support provides to the component is selected to minimise deformation of the component either during the manufacture of the component or during a subsequent heat treatment process.

US 2019/126558 A1 describes a method of generating control data for manufacturing a three-dimensional object, wherein data of the object is modified such that support structure data is added for a surface of the object that is intended to be used in a fluid flow path such that a contact region between the support structure and the object portion is substantially parallel to the flow path.

EP 3 219 417 A1 describes a method of making a part including a solid portion with an internal passage, wherein a solid core is formed within the internal passage and material that is not fused is positioned between the solid portion and the solid core.

It is an object of the present invention to provide an alternative or improved support structure for a three-dimensional object. The support structure and the three-dimensional object are produced by means of layer-wise applying and selectively solidifying of a building material. It is also an object of the present invention to provide an alternative or improved method of producing a three-dimensional object and a support structure by means of layer-wise applying and selectively solidifying of a building material, in particular by means of which support structure or production method improved support of overhanging parts of the object during its production can be provided and/or detachment of the support structure from the object after its completion can be facilitated.

The object is solved by a three-dimensional object and a support structure according to claim 1 and by a production method according to claim 10. Further alternatives of the support structure and the production method are given in the respective dependent claims. The features of the support structure specified in the dependent claims or described below can also be used for further development of the production method, and vice versa.

According to the invention, a three-dimensional object and a support structure are produced by means of layer-wise applying and selectively solidifying of a building material, the support structure being a three-dimensional structure that serves to provide support or stabilization to the three-dimensional object to be produced or to at least a part of the object. The support structure has a reduced resistance to compressional and/or tensional forces applied to the support structure in a first extension direction of the support structure, and in said first extension direction the support structure has an alternating shape including a plurality of crests.

Put another way, the support structure preferably has a reduced resistance to compressional and/or tensional forces applied to the support structure in a first extension direction of the support structure as compared to its resistance to compressional and/or tensional forces applied in any other direction of the support structure. In particular, the support structure has a first resistance to compressional and/or tensional forces applied in the first extension direction of the support structure and a second resistance to compressional and/or tensional forces applied in a second direction of the support structure, the resistance in the first extension direction being smaller than in the second direction.

Preferably, the support structure is a support structure produced in the same manufacturing process as the three-dimensional object. However, different process parameters, such as a power of an energetic radiation used for selective solidification or a scanning speed of an energetic beam etc., and/or different building materials may be used for the production of the three-dimensional object and the support structure.

Generally, in the context of the present application a support structure is understood as a three-dimensional structure built in an additive manufacturing process, which structure serves to provide support or stabilization to the three-dimensional object to be produced or to at least a part of the object. Preferably, the support structure directly contacts the object or a part of the object to provide support to the object. Preferably, the part of the object contacted by the support structure is a part that would otherwise be located above at least one layer of unsolidified building material, such as an overhanging part.

The support structure having a reduced resistance to compressional and/or tensional forces applied in a first extension direction of the support structure preferably defines said first extension direction being a weak direction of the support structure, i.e. a force being applied in this direction has a great impact on the support structure, such as damaging the support structure or causing the support structure to collapse. In particular, a force required for collapsing the support structure may be smaller when applied in the first extension direction than in any other direction. Preferably, the support structure has a minimum resistance to compressional and/or tensional forces applied to the support structure in the first extension direction as compared to a resistance to compressional and/or tensional forces applied in any other direction than the first extension direction. Still further preferably, the first extension direction is a direction in which the plurality of crests are formed in a consecutive manner.

The support structure can, for example, provide for the advantage of facilitating detachment of the support structure from the object after its completion, e.g. by applying a traction (pulling) force or a compression (pushing) force to the support structure in the direction of the first extension direction, in which direction the support structure has a reduced resistance to said forces as compared to other directions. In order to facilitate application of a traction and/or a compression force as mentioned above, it has proven to be particularly useful to supply the support structure with an interface region in which region a traction and/or compression tool can be (reversibly) connected to the support structure. For instance, such interface region can be equipped with an attachment mechanism and/or geometry serving as counterpart for a connection of the respective tool. Such mechanism and/or geometry can for instance have a shape of a ring, a hook, or a ball, which can be connected to the respective counter shape of the above-mentioned tool.

Generally, within the scope of the present application, an "extension direction" may be a straight line, but is not restricted to a straight line. Rather, an "extension direction" can be any trajectory that defines an extension of the support structure or of a cavity (see below), in particular also a curved trajectory. Such a trajectory may be defined, for example, as a line connecting the centers of cross-sections of the support structure or individual elements thereof, or centers of cross-sections of the cavity.

Preferably, in said first extension direction the shape of the support structure includes valleys between the crests. In particular, the support structure can include an alternating pattern of crests and valleys in the first extension direction. In particular, the support structure may have a zig-zag shape extending along its first extension direction or in a plane that comprises the first extension direction. The zig-zag shape or (alternating) pattern of crests and valleys along the first extension direction can, for example, provide for a reduced resistance to compressional and/or tensional forces in the first extension direction.

Preferably, the shape of the support structure is periodic in the first extension direction and/or symmetric with respect to an axis that extends perpendicular to the first extension direction at least in a portion of the support structure, further preferably along the entire support structure. Alternatively, the shape of the support structure preferably is on an irregular, e.g. non-periodic, basis in the first extension direction and/or asymmetric with respect to an axis that extends perpendicular to the first extension direction at least in a portion of the support structure. In this way, for example, a variety of different support structures can be provided that can be selected depending on the geometric features of the object to be supported.

Preferably, the first extension direction of the support structure is parallel to a surface of the layers applied in the process of producing the support structure and preferably also the three-dimensional object. Alternatively, or in addition, it is preferred that the first extension direction of the support structure is perpendicular to a direction in which the manufacturing process of the support structure and/or the three-dimensional object proceeds. The direction in which the manufacturing process proceeds can be defined as the direction in which successive layers of the building material are deposited. The first extension direction being parallel to the surface of the building material layers ensures, for example, that the weak direction of the support structure, i.e. its first extension direction, is different from the direction in which the manufacturing process proceeds. This may ensure that the support structure provides for good support of e.g. overhanging parts of the object during its production.

Preferably, the support structure is located substantially within a cavity of the three-dimensional object and the cavity has a main extension direction at least in a section thereof and the support structure is shaped and/or arranged within the cavity such that the first extension direction of the support structure is substantially parallel to the main extension direction of the cavity at least in the respective section of the cavity. Alternatively or in addition, the cavity has cavity walls and the support structure is shaped and/or arranged within the cavity such that the first extension direction of the support structure is substantially perpendicular to a tangential direction of at least one of the cavity walls. As mentioned above, the main extension direction can be a straight or curved line. This can provide for facilitated removal of the support structure from the object after its completion by applying a force in the main extension direction of the cavity, for example.

Alternatively or in addition, the cavity preferably is at least partially open or has at least one opening. Particularly preferred, the first extension direction of the support structure extends from or towards the opening of the cavity. Further preferably, the cavity extends along its main extension direction from a first opening to a second opening. This can provide for good access to the support structure located within the cavity of the object, for example. The three-dimensional object comprising the cavity can be, for example, a hollowed structure, such as a closed impeller, a structure comprising a channel etc.

Preferably, the support structure has a second extension direction arranged at an angle to the first extension direction, further preferably perpendicular to the first extension direction, and the support structure comprises faces, further preferably planar faces, that extend in said second extension direction. It is in particular preferred that the second extension direction of the support structure is parallel to the direction in which the manufacturing process proceeds and/or perpendicular to a surface of the layers of building material applied in the manufacturing process. This may provide for sufficient strength of the support structure, i.e. a high resistance to compressional and/or tensional forces, in the direction perpendicular to the surface of the applied layers of the building material so as to support overhanging parts, for example. In particular, the support structure may have a zig-zag shape in a plane perpendicular to the second extension direction. Preferably, the support structure has a maximum resistance to compressional and/or tensional forces applied to the support structure in the second extension direction as compared to a resistance to compressional and/or tensional forces applied in any other direction than the second extension direction.

Preferably, the support structure comprises at least one connection area that contacts the three-dimensional object. In particular, two connection areas of the support structure may be provided that contact the object at opposing sides of the support structure, the opposing sides preferably being arranged in the second extension direction of the support structure and/or delimiting the support structure. Further preferably, at least one connection area substantially has a zig-zag shape. The connection area(s) may provide for support of the object or a part thereof, for example. Preferably, at least one connection area of the support structure is provided that comprises projections that contact the three-dimensional object, the projections further preferably being tooth-shaped, such as projections having a U-shaped, V-shaped or L-shaped cross-section. The projections can, for example, serve to reduce the contact area between the support structure and the three-dimensional, thus facilitating removal of the support structure from the object, improving the surface quality of the object produced and/or reducing the amount of building material required for the production of the support structure.

According to the invention, a method of producing a three-dimensional object and a support structure by means of layer-wise applying and selectively solidifying of a building material is provided, wherein the support structure is designed to have a reduced resistance to compressional and/or tensional forces applied to the support structure in a first extension direction of the support structure and wherein in said first extension direction the support structure has an alternating shape including a plurality of crests. This may provide for a method of producing a support structure described above, for example.

For example, the building material used can be or comprise a building material in powder form, such as a metal powder, polymer powder, ceramic powder, sand, filled powder or mixed powder. The building material used can also be or comprise a building material other than a powder, such as a powder mixed with a fluid or a fluid alone.

Preferably, selective solidification of the building material is implemented by introducing energy, preferably electromagnetic energy, into the applied layers of the building material and an amount of energy introduced into those locations of a layer of the building material that correspond to a cross-section of the support structure differs from an amount of energy introduced into those locations of a layer of the building material that correspond to a cross-section of the three-dimensional object. An "amount of energy" may in particular refer to an amount of energy per unit area element. The amount of energy introduced in locations of the support structure may be higher or lower than the energy amount introduced in the locations of the three-dimensional object. In particular, the difference in energy input may be set depending on the building material used and/or a relative size and/or shape of the object and the support structure, for example.

Preferably, after completion of the three-dimensional object, the support structure is removed by applying a force to the support structure in the direction of its first extension direction. This may provide for easy removal of the support structure form the object, for example. Further preferably, the force is applied directly by means of a tool, such as a hammer and/or a chisel. Alternatively, the force is applied indirectly by means of a contact-free procedure, preferably by a chemical flow and/or vibration, for example ultrasonic vibration, in particular vibration with predetermined specific frequencies. A vibration may be applied, for example, to the three-dimensional object or to the support structure itself. A "chemical flow" used for the removal of the support structure may, for example, have an abrasive effect on the support structure due to chemical abrasion, or may act with a pressure wave of a gas or fluid flow on the support structure. The terms "indirectly" and "contact-free" here preferably refer to the application of a force without a tool being in contact with the support structure.

Further features and expediencies of the present invention are set out in the description of exemplary embodiments with the aid of the attached figures. Of the Figures,
- Fig. 1: shows a schematic view, partially in cross-section, of an additive manufacturing device that can be used for producing a three-dimensional object and a support structure according to an example of the present invention;
- Fig. 2: shows a schematic perspective view of the support structure shown in Fig. 1;
- Fig. 3: shows a schematic perspective view of an example of a three-dimensional object that can be produced by the device shown in Fig. 1;
- Fig. 4a and Fig. 4b: show five of the support structures shown in Fig. 2 located in a cavity of the object shown in Fig. 3, wherein Fig. 4a shows a schematic perspective view of the object and the support structures located in the cavity of the object and Fig. 4b shows a schematic perspective view of the support structures located in the cavity by schematically representing the object only by its outlines;
- Fig. 5: shows a schematic view of the support structure of Fig. 2 during removal of the support structure; and
- Fig. 6: shows a schematic view of an attachment region of the support structure of Fig. 2 according to a further development.

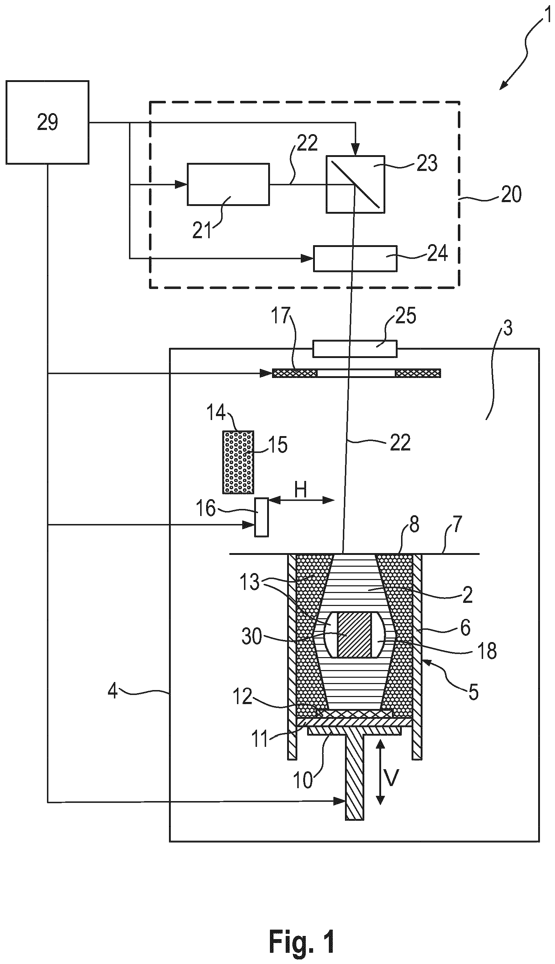

Hereafter, first a manufacturing device is described with respect to Fig. 1, which manufacturing device can be used for producing a support structure according to the invention and for carrying out the inventive method of producing a three-dimensional object and a support structure. The manufacturing device of Fig. 1 schematically shows, merely by way of example, a laser sintering device or laser melting device 1 for producing a three-dimensional object 2 and a support structure 30.

For building the object 2 and the support structure 30, the laser sintering device or laser melting device 1 comprises a process chamber 3 having a chamber wall 4. A container 5 open to its top is arranged in the process chamber 3, the container 5 having a container wall 6. The upper opening of the container 5 defines a working plane 7, wherein the part of the working plane 7 located inside the container 5 defines a build area 8.

A support 10 that can be moved in a vertical direction V is arranged in the container 5, wherein a base plate 11 is attached to the support 10 that serves as a bottom of the container 5. The base plate 11 can be formed separately from the support 10 or integrally with the support 10. Optionally, a building platform 12 can be arranged on the base plate 11 on which building platform the three-dimensional object 2 is built. If the device is provided without a building platform, the three-dimensional object can be built directly on the base plate 11, for example.

Fig. 1 shows the support structure 30 located within a cavity 18 of the object 2. Fig. 1 shows the object 2 and the support structure 30 to be produced in an intermediate state with several solidified layers of the object 2 and the support structure 30 surrounded by unsolidified building material 13. That part of the cavity 18 of the object 2 that is not occupied by the support structure 30 is also filled with unsolidified building material 13.

Furthermore, the device 1 comprises a supply container 14, also denoted as a storage container 14, for storing a building material 15, such as a building material in powder form, that can be used for the production of the three-dimensional object 2 and the support structure 30. A recoater 16 is arranged in the process chamber 3 so as to be movable across the build area 8 in a horizontal direction H and/or its opposite direction for applying successive layers of the building material in the build area 8.

An optional heating device such as a radiation heater 17 can be arranged in the process chamber for heating a layer of the building material applied within the build area 8 to a process temperature.

Furthermore, the laser sintering device or laser melting device 1 comprises an exposure device 20 that is arranged above the process chamber 3. The exposure device 20 comprises a laser 21 that generates a laser beam 22, which laser beam is deflected by a deflection device 23 and focused onto the working plane 7 by means of a focusing device 24, a window 25 provided in the process chamber wall 4 allowing for the laser beam 22 to enter the process chamber 3.

In an alternative embodiment not shown in the figures, the exposure device may comprise at least one laser module, preferably a plurality of laser modules, each of which laser modules comprising a plurality of arrays of semiconductor lasers, preferably VCSEL (Vertical Cavity Surface Emitting Laser) or VECSEL (Vertical External Cavity Surface Emitting Laser). The exposure device is configured to image the laser light of each laser array or of a sub-group of semiconductor lasers of one laser array to one pixel in the working plane, e.g. by means of suitable exposure optics. The laser arrays or subgroups of semiconductor lasers of one laser array are individually addressable to obtain a desired distribution of on- and off-switched pixels in the working plane. The exposure device is configured to move across the build area in a horizontal direction, during which movement the laser arrays or subgroups are switched on and off to selectively illuminate the pixels of a layer applied in the working plane that correspond to the respective cross-sections of the object and the support structure. The exposure device may be arranged within the process chamber or outside the process chamber.

Referring to Fig. 1, the laser sintering device or laser melting device 1 further comprises a control unit 29 for controlling its individual parts, such as the exposure device 20, the recoater 16 and the support 10. The control unit 29 may operate in accordance with a control program, which e.g. contains digital data of the object and the support structure to be produced, such as a three-dimensional layer model with information on the positions within a layer that are to be irradiated with the laser beam for solidifying the building material. Furthermore, the control program may specify process parameters for operating the laser sintering device such as a process temperature, a thickness of the layers to be applied, irradiation parameters, etc.

As used herein, the term "control unit" means any computerized controller capable of controlling the operation of an additive manufacturing machine or any component thereof. As is known in the art, the control unit can include a computer processing unit, memory, and output such as a wireless transceiver or a wireless port. In many instances, the control unit can be a computer.

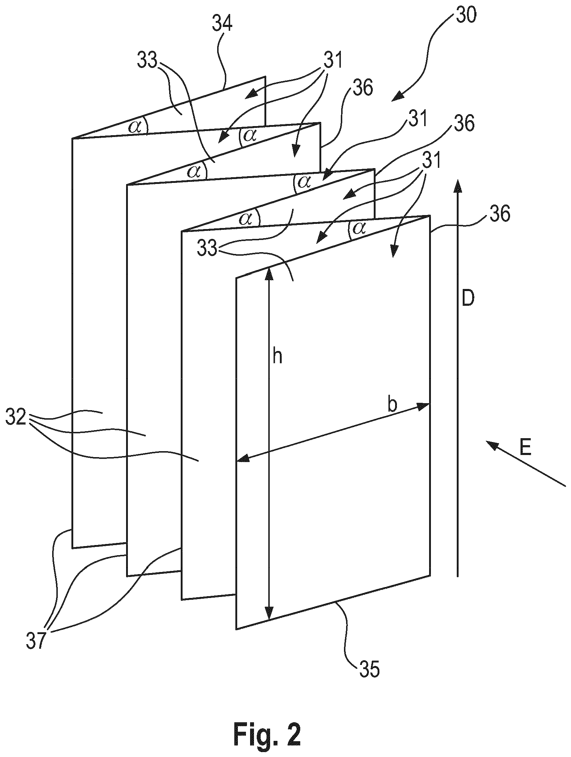

Fig. 2 shows a support structure 30 according to an exemplary embodiment of the present invention. The support structure 30 has a main extension defining a first extension direction E of the support structure 30. The support structure 30 comprises a plurality of walls 31 each comprising a substantially planar front side 32 and a substantially planar back side 33, the front and back sides 32, 33 also being referred to as planar faces or substantially planar faces. In the view of Fig. 2, only one of the front and back sides is visible for each wall. Each wall 31 extends in a second extension direction D perpendicular to the first extension direction E along a length h, also referred to as the height h of the support structure. An extension of each wall 31 between its front side 32 and its back side 33, also referred to as a thickness of the wall 31, is small compared to the height h of the wall and a width b of each wall 31 perpendicular to its height h and its thickness, and therefore the walls' thicknesses are not depicted in Fig. 2. Hence the support structure 30 can also be described by planar faces or substantially planar faces instead of its walls 31.

The walls 31 (or planar faces) are arranged in a zig-zag pattern along the first extension direction E of the support structure. This means that adjacent ones of the walls 31 (i.e. a front side 32 and an adjacent back side 33, or adjacent planar faces) are arranged at an angle α each, so that the walls 31 form an alternating pattern of crests 36 and valleys 37 arranged along the first extension direction E of the support structure 30 with one wall 31 extending between one crest 36 and one valley 37 each. Each crest 36 and each valley 37 extends along the direction of the second extension direction D.

In Fig. 2 the angle α formed between adjacent walls 31 or planar faces of the support structure is constant along the first extension direction E of the support structure 30. However, the angle formed between adjacent ones of the planar faces 31 may also vary along the first direction for the support structure, for example in an alternating manner, or gradually increase or decrease. Likewise, in Fig. 2 the height h of the walls 31 is constant along the first extension direction E of the support structure 30. However, the height h may also vary along the first extension direction E of the support structure, for example gradually increase or decrease. Likewise, in Fig. 2 the width b of the walls 31 is constant along the first extension direction E of the support structure 30. However, the width b may also vary along the first extension direction E of the support structure, for example gradually increase or decrease.

The support structure 30 further comprises a first or upper edge 34 and a second or lower edge 35 that delimit the support structure in the second direction D. This means that the walls 31 extend from the lower edge 34 to the upper edge 35 in the second extension direction D of the support structure 30. The upper edge 34 and the lower edge each have a zig-zag shape. The upper edge 34 and the lower edge 35 each form a connection area for contacting the three-dimensional object, as described below in greater detail.

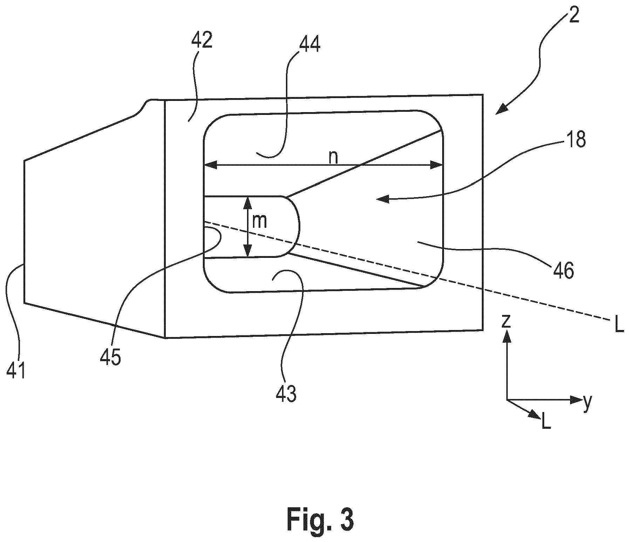

Fig. 3 shows an example of a three-dimensional object 2 that can be produced using the manufacturing device shown in Fig. 1. In the example of Fig. 3, the object 2 comprises a cavity 18 (cf. also Fig. 1) that is open to both a front side 41 of the object 2 and a rear side 42 of the object 2 and hence forms a channel extending through the object 2 in a main extension direction L from its front side 41 to its rear side 42. In the view of Fig. 3, the front side 41 of the object 2 is hidden from view by the object 2 itself, and the rear side 42 of the object faces the viewer.

The cavity 18 extends along a first direction z from a bottom wall 43 to a top wall 44, also referred to as the height m of the cavity, and the cavity 18 extends along a second direction y from a left side wall 45 to a right side wall 46, also referred to as the width n of the cavity 18. In the example of Fig. 3, the bottom and top walls 43, 44 are substantially planar walls each, and the side walls 45, 46 have a partially curved shape extending from the bottom wall 43 to the top wall 44, and the main extension direction L, the second direction y and the first direction z form a Cartesian coordinate system. Furthermore, in the example of Fig. 3, the top wall 44 of the cavity 18 gradually slopes towards the bottom wall 43 along the main extension direction L from the rear side 42 to the front side 41 of the object 2, such that the height m of the cavity 18 between the top wall 44 and the bottom wall 43 gradually decreases from the rear side 42 to the front side 41 of the object 2. In the example of Fig. 3, the sidewalls 45, 46 are arranged at a constant distance from one another along the main extension direction L of the cavity 18 such that the cavity has a constant width n. However, the width n of the cavity may also vary along the main extension direction L.

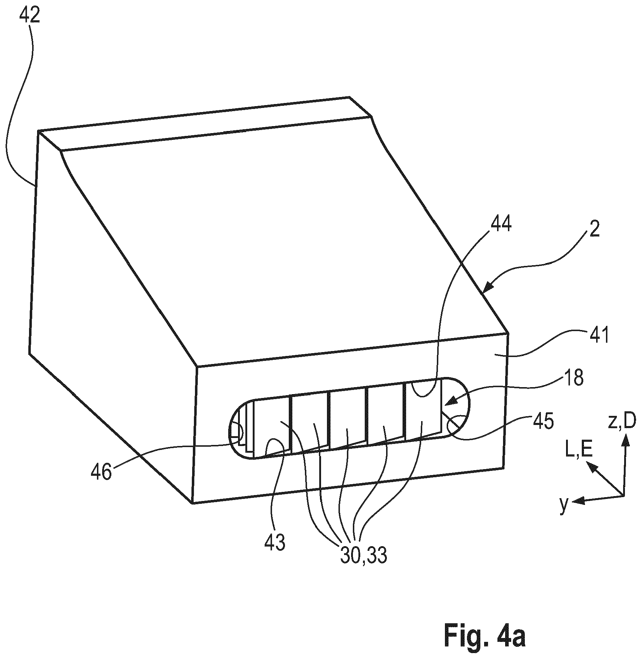

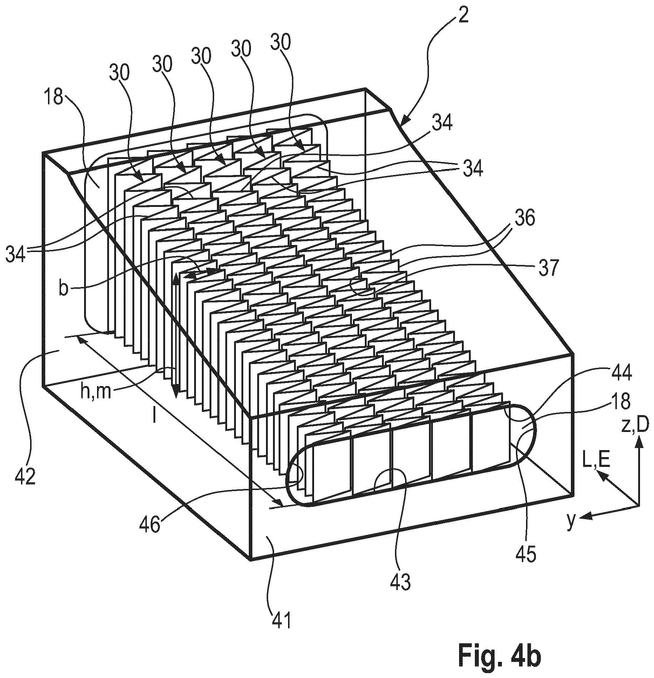

Figs. 4a and 4b schematically show five of the support structures 30 described above with reference to Fig. 2 being located in the cavity 18 of the object 2 shown in Fig. 3. Contrary to the view of Fig. 3, in the view of Figs. 4a and 4b the front side 41 of the object 2 faces the viewer. Fig. 4a shows a schematic perspective view of the object 2 and the support structures 30 located within the cavity 18, wherein essentially only the first back side 33 of each support structure 30 can be seen through the opening of the cavity 18 at the front side 41 of the object 2. In Fig. 4b only the outline of the object 2 is shown in order to depict the arrangement of the support structures 30 within the cavity 18.

In Fig. 4a, 4b and with further reference to Figs. 2 and 3, each one of the five support structures 30 is arranged within the cavity 18 of the object 2 in such a way that the first extension direction E (cf. Fig. 2) of the support structure 30 extends along the main extension direction L of the cavity 18 and the upper edge 34 of the support structure 30 contacts the top wall 44 of the cavity and the lower edge 35 contacts the bottom wall 43 of the cavity 18. Hence, each support structure 30 extends in its second extension direction D (cf. Fig. 2) along the first extension direction z of the cavity from the bottom wall 43 to the top wall 44 of the cavity 18. Hence, in the example of Figs. 4a, 4b, the height h of each support structure 30 equals the height m of the cavity at each point along its main extension direction L (in Fig. 4b, the heights h, m are merely shown at one location along the length L of the cavity), such that the height h of the support structure 30 gradually decreases along the first extension direction E of the support structure 30. A length I of the support structures 30 along their first extension direction E substantially equals a length of the cavity 18 along its main extension direction L from the front side 41 to the rear side 42 of the object 2.

The width b of the walls 31 of the support structures 30 and a number of the support structures 30 (in the example of Figs. 4a, 4b five support structure 30 are provided) is selected such that a total width of the number of support structures 30 in the second direction y of the cavity 18 between the left side wall 45 and the right side wall 46 is substantially equal to or smaller than the width n of the cavity. If the width n of the cavity 18 (cf. Fig. 3) is not constant along the main extension direction L of the cavity, e.g. increases or decreases along the main extension direction, the number of support structures 30 provided within the cavity and/or the widths b of their walls may be selected such that the total width of the number of support structures 30 in the second direction y of the cavity 18 varies along the main extension direction such that it is substantially equal to or smaller than the width n of the cavity at each location along the main extension direction L of the cavity. In the example of Fig. 4a, 4b, the support structures 30 are only located in a region between the substantially planar top and bottom walls 44, 43, and a region comprising the curved shape of the side walls 45, 46 of the cavity 18 is provided without the support structures 30. However, support structures 30 may also be provided in the region of the curved side walls 45, 46 of the cavity.

As can best be seen in Fig. 4b, the five support structures 30 located in the cavity 18 are arranged such that their first extension directions E are parallel to one another and each crest 36 of a first one of the support structures 30 contacts a valley 37 of an adjacent second one of the support structures 30. Alternatively, the support structures 30 may be staggered in the first extension direction E such that the crests and the valleys of adjacent ones of the support structures are offset from one another and/or a gap may be provided between adjacent support structures such that their crests and valleys are not in contact.

Referring now to Figs. 1 through 4b, operation of the laser sintering or laser melting device 1 is described. In order to produce the object 2 and the support structures 30, first the support 10 is lowered by an amount that corresponds to a desired layer thickness. The recoater 16 receives from the supply or storage container 14 an amount of building material 15 sufficient for the application of one or several layers. The recoater 16 then moves across the build area 8 in the horizontal direction H and applies a layer of the building material 15 onto the building platform 12 or a previously selectively solidified layer. Optionally, the applied layer is preheated by the radiation heater 17 to a working temperature. The exposure device 20 then directs the laser beam 22 to impinge onto the applied layer at the locations that correspond to the cross-section of the three-dimensional object 2 and the support structures 30 in the respective layer to introduce energy into these locations and thus selectively solidify the building material. These steps are repeated until the object 2 and the support structures 30 are completed and can be removed from the laser sintering or laser melting device 1.

In the process of selectively solidifying an applied layer of the building material, different process parameters may be applied for the locations corresponding to the support structure(s) 30 and for the locations corresponding to the object 2. For example, different energy input parameters such as the energy introduced per unit area, the scanning speed of the laser beam 22, etc. may be applied for the locations of the object and the support structure(s). Alternatively or in addition, different building materials may be used for the manufacture of the object and of the support structure(s).

Preferably, in the manufacturing process the support structure(s) 30 are oriented such that their second extension direction D, i.e. their height h, is substantially perpendicular to a surface of the layers applied during production of the object and support structure(s), i.e. extends along a direction in which the manufacturing process proceeds (in which successive layers are deposited). Likewise, the first extension direction E of the support structure(s) 30 is preferably substantially parallel to the surface of the layers applied in the process of producing the support structure(s) 30, i.e. substantially perpendicular to a direction in which the manufacturing process proceeds. This orientation of the support structure(s) 30 may provide for good support of the object 2 and during its production, since the walls 31 of the support structure 30 extending in the second extension direction D can provide for support of overhanging parts, such as that part of the object that is located above the cavity 18 (cf. Figs. 3, 4a, 4b), for example.

If the support structure(s) is/are located within a cavity of the three-dimensional object, which cavity has a main extension direction L, the support structure is preferably shaped and arranged within the cavity such that the first extension direction E of the support structure is substantially parallel to the main extension direction L of the cavity, as depicted in Figs. 1, 4a, 4b. Alternatively or in addition, the support structure is preferably shaped and/or arranged within the cavity such that the first extension direction E of the support structure is substantially perpendicular to a tangential direction of at least one of the cavity walls, e. g. of at least one of the bottom wall 43, the top wall 44 and the side walls 45, 46 of the cavity 18 described above with reference to Figs. 3 to 4b. Hence, it may be preferred to arrange the object 2 to be oriented within the container 5 during manufacturing in such a way that the main extension direction L of the cavity 18 in Figs. 3 to 4b is located substantially parallel to a surface of the layers applied during manufacturing of the object, i.e. substantially perpendicular to a direction in which the manufacturing process proceeds.

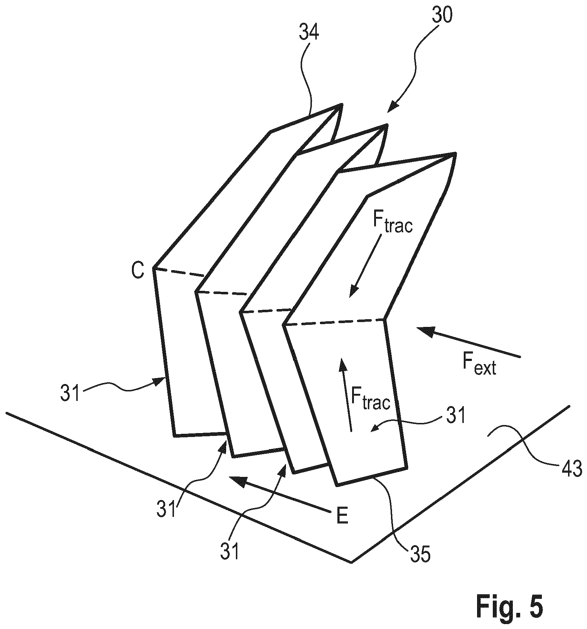

After completion of the three-dimensional object 2, the support structure(s) 30 is/are removed from the object 2. As shown in Fig. 5, the support structure can be removed by mechanically applying a force Fₑₓₜ to the support structure 30 in the direction of its first extension direction E, for example by using a tool, such as a chisel and a hammer. In the example of Figs. 2 to 4b, the opening of the cavity 18 and the first extension direction E of the support structures 30 extending away from the opening of the cavity provide for good access to the support structures 30 and for application of a force along the first extension direction E. As shown in Fig. 5, the force Fₑₓₜ is preferably applied to the center or center line c of the walls 31 of the support structure 30, resulting in internal traction forces F_{trac} of the walls 31 that cause the walls 31 to collapse. Due to the zig-zag shape of the support structure 30, the support structure has a reduced resistance to compressional and/or tensional forces applied in its first extension direction E and crack propagation in the first extension direction E of the support structure 30 is promoted such that the support structure 30 collapses. The relatively small connection areas of the upper and lower edge 34, 35 of the support structure 30 cause the support structure 30 to break away from the object 2 at the upper and lower edges 34, 35. In Fig. 5, only the bottom wall 43 of the cavity 18 (cf. Figs. 3 to 4b) is schematically depicted.

Alternatively to the process of removing the support structure(s) 30 from the object 2 by mechanically, i.e. directly, applying a force as shown in Fig. 5, a force can be applied to the support structure in its first extension direction indirectly by means of a contact-free procedure, such as by a chemical flow and/or by a vibration (not shown in the figures).

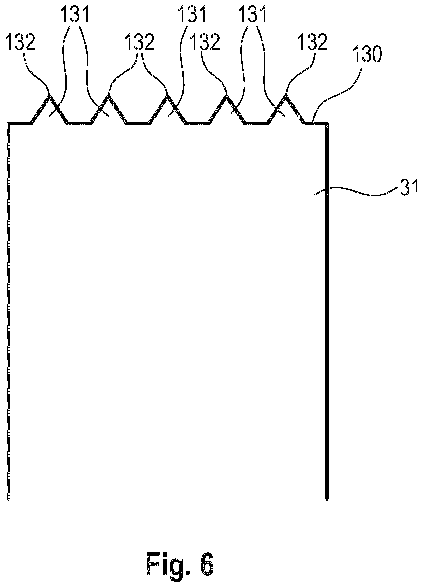

Fig. 6 shows a further development of the edge 130 of the support structure 30, which edge 130 serves as a connection area for contacting the object. For example, the upper and/or lower edge 34, 35 described above with reference to Figs. 2, 4a, 4b and 5 may be designed according to the further development described below with respect to Fig. 6.

Fig. 6 schematically shows a cross-sectional view of the upper portion of one wall 31 of the support structure, the cross-section being taken along the second extension direction D of the support structure 30 (cf. Fig. 2). The edge 130 according to the further development comprises a plurality of projections 131 spaced apart from one another, each projection having a tip or end portion 132 that serves for contacting the three-dimensional object (not shown in Fig. 6). The projections 131 may be tooth-shaped projections, i.e. have a U-shape, a V-shape or an L-shape, or may be ridge-shaped, for example. Also projections of different shapes may be provided. The projections may be provided in a total area of the respective edge or only in a portion thereof. Since the three-dimensional object is only contacted by the tips 132 of the projections 130, a connection area between the support structure 30 and the object can reduced, thus facilitating removal of the support structure and/or improving the surface quality of the object and/or reducing the amount of building material required for manufacturing the support structure.

Modifications of the above-described embodiments that fall within the scope of the claims are possible. For example, in the figures, the width of the support structure perpendicular to the first and second extension directions is substantially constant. If the width of the cavity of the object changes along the first extension direction of the support structure, the width of the support structure may also change. A change in the width of the support structure can be achieved, for example, by altering the angle between adjacent planar faces and/or adapting the extension of the planar faces in the width direction. Alternatively or in addition, the number of support structure arranged in the width-direction of the cavity can be adapted to the change of width of the cavity.

In the above embodiments, the walls or faces of the support structure are substantially planar. However, the walls or faces can also deviate from a planar shape and can be, for example, slightly curved or bent.

The support structure described in the embodiments above has a periodic shape in its first extension direction and is symmetric with respect to an axis that extends perpendicular to the first extension direction. Alternatively, the shape of the support structure can be on an irregular basis in the first extension direction and/or asymmetric with respect to an axis that extends perpendicular to the first extension direction. The support structure can also have a periodic shape in its first extension direction in a portion of the support structure and can be on an irregular basis on another portion of the support structure. Likewise, the support structure can be symmetric in a portion of the support structure and asymmetric in another portion.

The three-dimensional object described in the embodiments is merely an example and can have any other shape. The cavity does not need to be open at two sides, but it can also be open to one side can be a closed cavity. The supports can also be provided to support any other part or portion of the object and are not restricted to being arranged within a cavity.

Although the present invention has been described with reference to a laser sintering or laser melting device, it is not restricted to laser sintering or laser melting. Rather, the invention can be applied to any device or method for producing a three-dimensional object and a support structure by means of layer-wise applying and selectively solidifying of a building material.

For example, the exposure device can comprise one or more gas or solid state lasers or any other type of laser such as laser diodes, in particular VCSEL (Vertical Cavity Surface Emitting Laser) or VECSEL (Vertical External Cavity Surface Emitting Laser), or an array of those lasers. In general, any device for selectively introducing energy in form of wave or particle radiation into a layer of the building material can be used as an exposure device. Instead of a laser, another light source, an electron beam or any other energy or radiation source suitable for solidifying the building material may be used, for example. Instead of deflecting an energetic beam, irradiation by means of a moveable exposure device can be applied. The invention can also be applied to selective mask sintering, wherein a mask and an extended light source are used instead of a deflectable laser beam, or to high-speed sintering (HSS) wherein a material that increases (absorption sintering) or reduces (inhibition sintering) the absorption of the radiation at the respective locations can be applied selectively onto the building material layer and is then unselectively irradiated by a large-area irradiation or by means of a moveable exposure device.

Instead of the introduction of energy, the selective solidification of the applied building material can also be achieved by other methods, for example by application of an adhesive. In general, the invention relates to the additive production of a three-dimensional object and support structure by means of a layer-by-layer application and selective solidification of a building material, irrespective of the manner in which the building material is solidified.

## Claims

1. A three-dimensional object (2) and a support structure (30), which support structure (30) and three-dimensional object (2) are produced by means of layer-wise applying and selectively solidifying of a building material (15) in an additive manufacturing process, and which support structure (30) is a three-dimensional structure that serves to provide support or stabilization to the three-dimensional object (2) to be produced or to at least a part of the object,
wherein the support structure (30) has a reduced resistance to compressional and/or tensional forces applied to the support structure (30) in a first extension direction (E) of the support structure (30) and
**characterised in that** in said first extension direction (E) the support structure (30) has an alternating shape including a plurality of crests (36).

2. The three-dimensional object and support structure of claim 1, wherein in said first extension direction (E) the shape of the support structure includes valleys (37) between the crests (36).

3. The three-dimensional object and support structure of claim 1 or 2, wherein the shape of the support structure is periodic in the first extension direction (E) and/or symmetric with respect to an axis that extends perpendicular to the first extension direction at least in a portion of the support structure.

4. The three-dimensional object and support structure of one of claims 1 to 3, wherein the shape of the support structure is on an irregular basis in the first extension direction and/or asymmetric with respect to an axis that extends perpendicular to the first extension direction at least in a portion of the support structure.

5. The three-dimensional object and support structure of one of claims 1 to 4, wherein the first extension direction of the support structure is parallel to a surface of the layers applied in the process of producing the support structure.

6. The three-dimensional object and support structure of one of claims 1 to 5, wherein the support structure is located substantially within a cavity (18) of the three-dimensional object (2) and wherein the cavity (18) has a main extension direction (L) at least in a section thereof and the support structure (30) is shaped and/or arranged within the cavity (18) such that the first extension direction (E) of the support structure is substantially parallel to the main extension direction (L) of the cavity at least in the respective section of the cavity and/or
wherein the cavity has cavity walls (43, 44, 45, 46) and wherein the support structure is shaped and/or arranged within the cavity such that the first extension direction (E) of the support structure is substantially perpendicular to a tangential direction of at least one of the cavity walls.

7. The three-dimensional object and support structure of one of claims 1 to 6, wherein the support structure has a second extension direction (D) arranged at an angle to the first extension direction (E), preferably perpendicular to the first extension direction, and wherein the support structure comprises faces (31, 32, 33), preferably planar faces, that extend in said second extension direction.

8. The three-dimensional object and support structure of one of claims 1 to 7, wherein the support structure comprises at least one connection area (34, 35, 130) that contacts the three-dimensional object (2).

9. The three-dimensional object and support structure of claim 8, wherein at least one connection area (130) of the support structure comprises projections (131) that contact the three-dimensional object (2), the projections preferably being tooth-shaped.

10. A method of producing a three-dimensional object (2) and a support structure (30) by means of layer-wise applying and selectively solidifying of a building material (15) in an additive manufacturing process, which support structure (30) is a three-dimensional structure that serves to provide support or stabilization to the three-dimensional object (2) to be produced or to at least a part of the object, wherein the support structure (30) is designed to have a reduced resistance to compressional and/or tensional forces applied to the support structure (30) in a first extension direction (E) of the support structure (30) and **characterised in that** in said first extension direction the support structure (30) has an alternating shape including a plurality of crests (36).

11. The method of claim 10, wherein selective solidification of the building material is implemented by introducing energy, preferably electromagnetic energy, into the applied layers of the building material and
wherein an amount of energy introduced into those locations of a layer of the building material that correspond to a cross-section of the support structure (30) differs from an amount of energy introduced into those locations of a layer of the building material that correspond to a cross-section of the three-dimensional object (2).

12. The method of claim 10 or 11, wherein after completion of the three-dimensional object (2) the support structure (30) is removed by applying a force to the support structure in the direction of its first extension direction (E).

13. The method of claim 12, wherein the force is applied directly by means of a tool, such as a hammer and/or a chisel.

14. The method of claim 12, wherein the force is applied indirectly by means of a contact-free procedure, preferably by a chemical flow and/or vibration.

## Patentansprüche

1. Dreidimensionales Objekt (2) und Stützstruktur (30), wobei die Stützstruktur (30) und das dreidimensionale Objekt (2) durch schichtweises Aufbringen und selektives Verfestigen eines Aufbaumaterials (15) in einem additiven Herstellungsverfahren hergestellt werden, und wobei die Stützstruktur (30) eine dreidimensionale Struktur ist, die dazu dient, das herzustellende dreidimensionale Objekt (2) oder zumindest einen Teil des Objekts zu stützen oder zu stabilisieren,
wobei die Stützstruktur (30) einen verringerten Widerstand gegenüber auf die Stützstruktur (30) in einer ersten Erstreckungsrichtung (E) der Stützstruktur (30) ausgeübten Druck- und/oder Zugkräften aufweist und
**dadurch gekennzeichnet ist, dass** die Stützstruktur (30) in der ersten Erstreckungsrichtung (E) eine alternierende Form aufweist, die eine Mehrzahl von Erhebungen (36) umfasst.

2. Dreidimensionales Objekt und Stützstruktur nach Anspruch 1, wobei die Form der Stützstruktur in der ersten Erstreckungsrichtung (E) Täler (37) zwischen den Erhebungen (36) umfasst.

3. Dreidimensionales Objekt und Stützstruktur nach Anspruch 1 oder 2, wobei die Form der Stützstruktur in der ersten Erstreckungsrichtung (E) periodisch ist und/oder symmetrisch in Bezug auf eine Achse ist, die sich zumindest in einem Abschnitt der Stützstruktur senkrecht zur ersten Erstreckungsrichtung erstreckt.

4. Dreidimensionales Objekt und Stützstruktur nach einem der Ansprüche 1 bis 3, wobei die Form der Stützstruktur in der ersten Erstreckungsrichtung unregelmäßig ist und/oder asymmetrisch in Bezug auf eine Achse ist, die sich zumindest in einem Abschnitt der Stützstruktur senkrecht zur ersten Erstreckungsrichtung erstreckt.

5. Dreidimensionales Objekt und Stützstruktur nach einem der Ansprüche 1 bis 4, wobei die erste Erstreckungsrichtung der Stützstruktur parallel zu einer Oberfläche der bei der Herstellung der Stützstruktur aufgebrachten Schichten verläuft.

6. Dreidimensionales Objekt und Stützstruktur nach einem der Ansprüche 1 bis 5, wobei sich die Stützstruktur im Wesentlichen innerhalb eines Hohlraums (18) des dreidimensionalen Objekts (2) befindet und wobei der Hohlraum (18) zumindest abschnittsweise eine Haupterstreckungsrichtung (L) aufweist und die Stützstruktur (30) so ausgestaltet und/oder innerhalb des Hohlraums (18) angeordnet ist, dass die erste Erstreckungsrichtung (E) der Stützstruktur zumindest in dem jeweiligen Abschnitt des Hohlraums im Wesentlichen parallel zur Haupterstreckungsrichtung (L) des Hohlraums verläuft und/oder
wobei der Hohlraum Hohlraumwände (43, 44, 45, 46) aufweist und wobei die Stützstruktur so ausgestaltet und/oder innerhalb des Hohlraums angeordnet ist, dass die erste Erstreckungsrichtung (E) der Stützstruktur im Wesentlichen senkrecht zu einer tangentialen Richtung von zumindest einer der Hohlraumwände ist.

7. Dreidimensionales Objekt und Stützstruktur nach einem der Ansprüche 1 bis 6, wobei die Stützstruktur eine zweite Erstreckungsrichtung (D) aufweist, die in einem Winkel zur ersten Erstreckungsrichtung (E), vorzugsweise senkrecht zur ersten Erstreckungsrichtung, angeordnet ist, und wobei die Stützstruktur Flächen (31, 32, 33), vorzugsweise ebene Flächen, aufweist, die sich in der zweiten Erstreckungsrichtung erstrecken.

8. Dreidimensionales Objekt und Stützstruktur nach einem der Ansprüche 1 bis 7, wobei die Stützstruktur zumindest einen Verbindungsbereich (34, 35, 130) umfasst, der das dreidimensionale Objekt (2) berührt.

9. Dreidimensionales Objekt und Stützstruktur nach Anspruch 8, wobei zumindest ein Verbindungsbereich (130) der Stützstruktur Vorsprünge (131) aufweist, die das dreidimensionale Objekt (2) berühren, wobei die Vorsprünge vorzugsweise zahnförmig sind.

10. Verfahren zur Herstellung eines dreidimensionalen Objekts (2) und einer Stützstruktur (30) durch schichtweises Aufbringen und selektives Verfestigen eines Aufbaumaterials (15) in einem additiven Herstellungsverfahren, wobei die Stützstruktur (30) eine dreidimensionale Struktur ist, die dazu dient, das herzustellende dreidimensionale Objekt (2) oder zumindest einen Teil des Objekts zu stützen oder zu stabilisieren,
wobei die Stützstruktur (30) so ausgebildet ist, dass sie einen verringerten Widerstand gegenüber auf die Stützstruktur (30) in einer ersten Erstreckungsrichtung (E) der Stützstruktur (30) ausgeübten Druck- und/oder Zugkräften aufweist, und
**dadurch gekennzeichnet, dass** die Stützstruktur (30) in der ersten Erstreckungsrichtung eine alternierende Form aufweist, die eine Mehrzahl von Erhebungen (36) umfasst.

11. Verfahren nach Anspruch 10, wobei die selektive Verfestigung des Aufbaumaterials durch Einbringen von Energie, vorzugsweise elektromagnetischer Energie, in die aufgebrachten Schichten des Aufbaumaterials erfolgt und
wobei sich die Energiemenge, die in die einem Querschnitt der Stützstruktur (30) entsprechenden Stellen einer Schicht des Aufbaumaterials eingebracht wird, von einer Energiemenge unterscheidet, die in die einem Querschnitt des dreidimensionalen Objekts (2) entsprechenden Stellen einer Schicht des Aufbaumaterials eingebracht wird.

12. Verfahren nach Anspruch 10 oder 11, wobei nach Fertigstellung des dreidimensionalen Objekts (2) die Stützstruktur (30) entfernt wird, indem eine Kraft auf die Stützstruktur in Richtung ihrer ersten Erstreckungsrichtung (E) aufgebracht wird.

13. Verfahren nach Anspruch 12, wobei die Kraft direkt mittels eines Werkzeugs, beispielsweise einem Hammer und/oder einem Meißel, aufgebracht wird.

14. Verfahren nach Anspruch 12, bei dem die Kraft indirekt durch ein berührungsloses Verfahren aufgebracht wird, vorzugsweise durch eine chemische Strömung und/oder Vibration.

## Revendications

1. Un objet tridimensionnel (2) et une structure de support (30), ladite structure de support (30) et ledit objet tridimensionnel (2) étant produits au moyen d'une application par couches et d'une solidification sélective d'un matériau de construction (15) dans un procédé de fabrication additive, et ladite structure de support (30) étant une structure tridimensionnelle qui sert à fournir un support ou une stabilisation à l'objet tridimensionnel (2) à produire ou à au moins une partie de l'objet,
dans lequel la structure de support (30) présente une résistance réduite à des forces de compression et/ou de tension appliquées à la structure de support (30) dans une première direction d'extension (E) de la structure de support (30) et
**caractérisé en ce que**, dans ladite première direction d'extension (E), la structure de support (30) a une forme alternée comprenant une pluralité de crêtes (36).

2. L'objet tridimensionnel et la structure de support selon la revendication 1, dans lequel, dans ladite première direction d'extension (E), la forme de la structure de support comprend des creux (37) entre les crêtes (36).

3. L'objet tridimensionnel et la structure de support selon la revendication 1 ou 2, dans lequel la forme de la structure de support est périodique dans la première direction d'extension (E) et/ou symétrique par rapport à un axe qui s'étend perpendiculairement à la première direction d'extension au moins dans une portion de la structure de support.

4. L'objet tridimensionnel et la structure de support selon l'une des revendications 1 à 3, dans lequel la forme de la structure de support est sur une base irrégulière dans la première direction d'extension et/ou asymétrique par rapport à un axe qui s'étend perpendiculairement à la première direction d'extension au moins dans une portion de la structure de support.

5. L'objet tridimensionnel et la structure de support selon l'une des revendications 1 à 4, dans lequel la première direction d'extension de la structure de support est parallèle à une surface des couches appliquées dans le procédé de production de la structure de support.

6. L'objet tridimensionnel et la structure de support selon l'une des revendications 1 à 5, dans lequel la structure de support est située sensiblement à l'intérieur d'une cavité (18) de l'objet tridimensionnel (2) et dans lequel la cavité (18) a une direction d'extension principale (L) au moins dans une section de celle-ci et la structure de support (30) est formée et/ou agencée à l'intérieur de la cavité (18) de telle sorte que la première direction d'extension (E) de la structure de support est sensiblement parallèle à la direction d'extension principale (L) de la cavité au moins dans la section respective de la cavité et/ou
dans lequel la cavité a des parois de cavité (43, 44, 45, 46) et dans lequel la structure de support est formée et/ou agencée à l'intérieur de la cavité de telle sorte que la première direction d'extension (E) de la structure de support est sensiblement perpendiculaire à une direction tangentielle d'au moins une des parois de cavité.

7. L'objet tridimensionnel et la structure de support selon l'une des revendications 1 à 6, dans lequel la structure de support a une deuxième direction d'extension (D) agencée selon un angle par rapport à la première direction d'extension (E), de préférence perpendiculairement à la première direction d'extension, et dans lequel la structure de support comprend des faces (31, 32, 33), de préférence des faces planes, qui s'étendent dans ladite deuxième direction d'extension.

8. L'objet tridimensionnel et la structure de support selon l'une des revendications 1 à 7, dans lequel la structure de support comprend au moins une zone de connexion (34, 35, 130) qui est en contact avec l'objet tridimensionnel (2).

9. L'objet tridimensionnel et la structure de support selon la revendication 8, dans lequel au moins une zone de connexion (130) de la structure de support comprend des saillies (131) qui sont en contact avec l'objet tridimensionnel (2), les saillies étant de préférence en forme de dents.

10. Un procédé pour produire un objet tridimensionnel (2) et une structure de support (30) au moyen d'une application par couches et d'une solidification sélective d'un matériau de construction (15) dans un procédé de fabrication additive, ladite structure de support (30) étant une structure tridimensionnelle qui sert à fournir un support ou une stabilisation à l'objet tridimensionnel (2) à produire ou à au moins une partie de l'objet,
dans lequel la structure de support (30) est conçue pour avoir une résistance réduite aux forces de compression et/ou de tension appliquées à la structure de support (30) dans une première direction d'extension (E) de la structure de support (30), et **caractérisé en ce que** dans ladite première direction d'extension, la structure de support (30) a une forme alternée comprenant une pluralité de crêtes (36).

11. Le procédé selon la revendication 10, dans lequel la solidification sélective du matériau de construction est mise en oeuvre en introduisant de l'énergie, de préférence de l'énergie électromagnétique, dans les couches appliquées du matériau de construction, et
dans lequel une quantité d'énergie introduite dans les emplacements d'une couche du matériau de construction qui correspondent à une section transversale de la structure de support (30) diffère d'une quantité d'énergie introduite dans les emplacements d'une couche du matériau de construction qui correspondent à une section transversale de l'objet tridimensionnel (2).

12. Le procédé selon la revendication 10 ou 11, dans lequel après l'achèvement de l'objet tridimensionnel (2), la structure de support (30) est retirée en appliquant une force à la structure de support dans la direction de sa première direction d'extension (E).

13. Le procédé selon la revendication 12, dans lequel la force est appliquée directement au moyen d'un outil, tel qu'un marteau et/ou un ciseau.

14. Le procédé selon la revendication 12, dans lequel la force est appliquée indirectement au moyen d'une procédure sans contact, de préférence par un écoulement chimique et/ou une vibration.
